# EUROPÄISCHE PATENTSCHRIFT

(11) **EP 3 476 696 B1**
(45) Veröffentlichungstag und Bekanntmachung des Hinweises auf die Patenterteilung: **15.07.2020**
(21) Anmeldenummer: 18194311.9
(22) Anmeldetag: 13.09.2018
(51) Int. Cl.: B62D 13/06, G06K 9/00, B60D 1/24, B60D 1/30, B60D 1/62

(54) **VERFAHREN ZUM ERMITTELN VON OBJEKTGRENZEN EINES OBJEKTS IN EINEM AUSSENBEREICH EINES KRAFTFAHRZEUGS SOWIE STEUERVORRICHTUNG UND KRAFTFAHRZEUG**
METHOD FOR DETERMINING OBJECT BOUNDARIES OF AN OBJECT IN AN EXTERNAL AREA OF A MOTOR VEHICLE AND CONTROL DEVICE AND MOTOR VEHICLE
PROCÉDÉ DE DÉTERMINATION DES LIMITES D'UN OBJET DANS UNE ZONE EXTERNE D'UN VÉHICULE AUTOMOBILE AINSI QUE DISPOSITIF DE COMMANDE ET VÉHICULE AUTOMOBILE

(30) Priorität: 25.10.2017 DE 102017219123
(43) Veröffentlichungstag der Anmeldung: 01.05.2019
(73) Patentinhaber: VOLKSWAGEN AKTIENGESELLSCHAFT, 38440 Wolfsburg (DE)
(72) Erfinder: Loeben, Dennis, 10405 Berlin (DE)

(56) Entgegenhaltungen:
- DE-A1-102014 223 141
- DE-A1-102015 201 586
- DE-B3-102011 101 990

## Beschreibung

Die Erfindung betrifft ein Verfahren zum Ermitteln von Objektgrenzen eines Objekts in einem Außenbereich eines Kraftfahrzeugs. Das Objekt ist hierbei mit dem Kraftfahrzeug verbunden, aber relativ beweglich gelagert. Es kann sich beispielsweise um einen Anhänger handeln. Zu der Erfindung gehören auch eine Steuervorrichtung zum Durchführen des Verfahrens sowie ein Kraftfahrzeug mit der erfindungsgemäßen Steuervorrichtung.

In einem Kraftfahrzeug kann ein Fahrerassistenzsystem bereitgestellt sein, welches einen Fahrer beim Führen des Kraftfahrzeugs unterstützen kann, während an das Kraftfahrzeug ein Anhänger angekuppelt ist. Für Kurvenfahrten (vorwärts und rückwärts) ist hierbei der maximal einstellbare Knickwinkel zwischen Kraftfahrzeug und Anhänger ein wichtiger Parameter für das Fahrerassistenzsystem, um eine Kollision oder ein Verkanten zwischen Anhänger und Kraftfahrzeug zu vermeiden. Bei heutigen Fahrerassistenzsystemen wird der Wert des Knickwinkels unabhängig von der realen Form der Anhängerdeichsel des Anhängers vorgegeben. Damit für eine Vielzahl von möglichen Formen stets sichergestellt ist, dass es zu keinem Verkanten kommt, muss eine möglichst breite Form der Deichsel angenommen werden. Dadurch ist aber der Fahrer vor allem bei einer schmalen Anhängerdeichsel in der Fahrdynamik eingeschränkt.

Aus der DE 10 2011 113 191 A1 ist ein Verfahren bekannt, um den aktuellen Knickwinkel zwischen einem Kraftfahrzeug und einem daran angekuppelten Anhänger zu ermitteln. Das Verfahren basiert auf einer Kantendetektion in einem Bild einer Rückfahrkamera. Das Verfahren kann zwar den realen Knickwinkel erkennen, aber nicht den maximal möglichen Knickwinkel vorhersagen.

Aus der DE 10 2008 045 436 A1 ist ebenfalls ein Verfahren zum Bestimmen eines Knickwinkels zwischen einem Kraftfahrzeug und einem Anhänger bekannt. Bei dem Verfahren wird der Knickwinkel durch Vergleich eines Bildes einer Kamera mit einem Referenzbild ermittelt. Das Referenzbild zeigt die Anhängerdeichsel des Anhängers bei einem bekannten Knickwinkel. Nachteilig bei diesem Verfahren ist, dass für alle Formen von Anhängerdeichseln, die mit dem Kraftfahrzeug verwendet werden sollen, entsprechende Referenzbilder bereitgestellt werden müssen.

Aus der DE 10 2004 050 149 A1 ist ein Verfahren zur Bestimmung eines Deichselwinkels bekannt, das auf einem Modell des Anhängers mit Deichsel beruht. Auch hier muss für jede Form einer Deichsel, die mit dem Kraftfahrzeug verwendet werden soll, ein passendes Modell bereitgestellt werden, was das Verfahren aufwändig macht.
Aus der DE 10 2011 104 256 A1 ist ein Verfahren zum Bestimmen eines Knickwinkels zwischen Kraftfahrzeug und Anhänger bekannt, bei welchem die Deichsel charakterisierende Bildmerkmale in einem Bild einer Kamera ermittelt werden und die Lage der Bildmerkmale mit der Lage derselben Bildmerkmale in einem Referenzbild verglichen wird. Hieraus können Richtungsvektoren bestimmt werden, von denen auf den Knickwinkel rückgeschlossen werden kann. Das Verfahren erfordert eine aufwändige Kalibrierphase, bei welcher der Knickwinkel für das Referenzbild bekannt sein muss.
Das beschriebene Problem ist aber allgemeiner. Wann immer ein Objekt mit einem Kraftfahrzeug relativ beweglich verbunden ist, ist es vorteilhaft zu wissen, wo sich Objektgrenzen des Objekts befinden, um hieraus beispielsweise den maximal möglichen Knickwinkel zu ermitteln, bei welchem das Objekt mit seinen Objektgrenzen das Kraftfahrzeug berührt oder mit ihm kollidiert.
Aus der DE 10 2011 101 990 B3 ist ein Verfahren zur Bestimmung eines relativen Deichselwinkels in einem Gliederzug bekannt, wobei in zwei Kamerabildern entlang Kreisbogen-förmiger Bildausschnitte eine Korrelation derselben durchgeführt wird, um eine relative Verschiebung der Bildinhalte zu erkennen, woraus auf den Deichselwinkel geschlossen wird. Die DE 10 2011 101 990 B3 ist als nächstliegender Stand der Technik nach dem Oberbegriff des Anspruchs 1 zu sehen.
Aus der DE 10 2015 201 586 A1 ein Verfahren bekannt, um einen Anhängertyp anhand eines Kamerabilds wieder zu erkennen, indem in dem Kamerabild entlang von Kreisbogenförmigen Bildausschnitten ein Verlauf von Farbwerten des Bildinhalts erfasst wird und in dem jeweiligen Verlauf dann charakteristische Merkmale, zum Beispiel Kanten, extrahiert werden, um dann anhand der charakteristischen Merkmale und einem Vergleich mit einem abgespeichertem Muster den Typ des Anhängers wieder zu erkennen.
Der Erfindung liegt die Aufgabe zugrunde, bei einem Objekt, das in einem Außenbereich des Kraftfahrzeugs an diesem relativ beweglich angekuppelt oder angeordnet ist, dessen Objektgrenzen zu ermitteln.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zum Ermitteln von Objektgrenzen eines Objekts in einem Außenbereich eines Kraftfahrzeugs bereitgestellt. Das Verfahren geht davon aus, dass das das Objekt mit dem Kraftfahrzeug relativbeweglich verbunden ist. Durch eine Steuervorrichtung des Kraftfahrzeugs wird während einer Fahrt des Kraftfahrzeugs mittels einer Kamera zu zumindest zwei unterschiedlichen Messzeitpunkten jeweils ein Bild erzeugt. Das Bild zeigt das Objekt vor einem Hintergrund des Außenbereichs.

Durch die Steuervorrichtung wird in einem ersten der Bilder zumindest eine Scanlinie festgelegt. Eine andere Bezeichnung für Scanlinie ist auch Abtastlinie. Eine Scanlinie ist eine Linie, die über das Bild verläuft und hierdurch eine Folge von Pixeln festlegt, die auf der Scanlinie liegen. Zu jeder Scanlinie in jedem anderen Bild eine korrespondierende Scanlinie festgelegt. In jedem Bild werden also dieselben Scanlinien definiert, wobei eben eine Scanlinie des ersten Bilds mit jeweils einer Scanlinie jedes anderen Bilds korrespondiert, weshalb diese Scanlinien korrespondierende Scanlinien genannt sind.

Zu jeder Scanlinie des ersten Bilds wird zu einer vorbestimmten Bildeigenschaft, beispielsweise der Pixelhelligkeit oder Pixelfarbe, ein sich entlang der Scanlinie ergebendes Profil ermittelt. Es werden also die jeweiligen Werte der Bildeigenschaft jedes Pixels entlang der Scanlinie aufgetragen, sodass sich als Verlauf das Profil ergibt. Zudem wird entlang der jeweils korrespondierenden Scanlinie jedes anderen Bilds ebenfalls ein sich ergebendes korrespondierendes Profil ermittelt. Man kann nun also das Profil jeder Scanlinie des ersten Bilds mit dem Profil der korrespondierenden Scanlinie jedes anderen Bilds vergleichen. Entsprechend wird zu dem Profil jeder Scanlinie des ersten Bilds eine jeweilige Verschiebeweite ermittelt, um welche das korrespondierende Profil jedes anderen Bilds bezüglich des Profils dieser Scanlinie verschoben werden muss, um eine maximale Übereinstimmung zu erhalten. Beispielsweise können hierzu das Profil und das korrespondierende Profil mittels einer Korrelation verglichen werden.

Nun ist bekannt, wie weit sich das Profil aufgrund der relativen Bewegung des Objekts bezüglich des Kraftfahrzeugs entlang der Scanlinie verschoben hat. Dem Profil jeder Scanlinie des ersten Bilds wird das um die jeweilige Verschiebeweite verschobene korrespondierende Profil jedes anderen Bilds überlagert. Man gleicht also die Relativbewegungen des Objekts bezüglich des Kraftfahrzeugs aus, indem jedes korrespondierende Profil zurückverschoben wird, nämlich um die Verschiebeweite, sodass das korrespondierende Profil jedes anderen Bilds dem jeweiligen Profil jeder Scanlinie des ersten Bilds zu liegen kommt. Das Überlagern kann beispielsweise durch Multiplizieren der Profile geschehen. Insgesamt ergibt sich somit für jede Scanlinie ein Überlagerungsprofil, welches aus den überlagerten Profilen gebildet ist. Wichtig zu wissen ist nun, dass jedes Profil zwei Bestandteile oder Segmente aufweisen kann, nämlich ein Segment, das zum Objekt gehört, und Segmente, die zum Hintergrund gehören. Während einer Rollbewegung oder Fahrt des Kraftfahrzeugs ändert sich aber der Hintergrund ständig, während das mit dem Kraftfahrzeug verbundene Objekt gleich bleibt. Somit weist bei jedem Profil auch dasjenige Segment, das zum Objekt gehört, stets denselben oder einen ähnlichen Verlauf auf. Dagegen ändern sich die Segmente, die zum Hintergrund gehören, in jedem Profil. Durch die Überlagerung wird somit also jedes Segment, das zum Hintergrund gehört "herausgemittelt". Dagegen überlagern sich die Segmente, die zum Objekt gehören, konstruktiv, das heißt es bildet sich im Überlagerungsprofil das Muster oder der Verlauf aus, der für das Objekt charakteristisch ist. Die Segmente, die dem Hintergrund entsprechen, weisen dagegen einen Verlauf auf, der zum Beispiel mit jedem weiteren überlagerten Profil zu Null hin tendiert. Entsprechend wird in dem Überlagerungsprofil jeder Scanlinie auf Grundlagen eines vorbestimmten Abgrenzungskriteriums ein Referenzmuster ermittelt. Dieses Referenzmuster ist der sich im Segment des Objekts ergebende Verlauf des Profils. Jeweilige Grenzen des Referenzmusters, also der rechte Rand und der linke Rand oder der vordere Rand und hintere Rand, werden als die jeweiligen Objektgrenzen signalisiert. Somit kann man also vorhersagen, wie weit das Objekt relativ zum Kraftfahrzeug bewegt werden kann, bevor eine Objektgrenze des Objekts das Kraftfahrzeug berührt. Die hierfür nötige maximale Verschiebeweite kann eine entsprechende relative Bewegung des Objekts bezüglich des Kraftfahrzeugs umgewandelt werden. Bei einem Anhänger, bei welchem als Objekt die Anhängerdeichsel erkannt werden könnte, kann also zum Beispiel der maximale Knickwinkel auf diese Weise ermittelt werden.

Durch die Erfindung ergibt sich der Vorteil, dass mittels des Verfahrens ohne Kenntnis der Geometrie des Objekts durch Beobachten den Profile der unterschiedlichen Bilder ermittelt werden kann, wie breit das Objekt ist oder welche Objektgrenzen das Objekt aufweist. Daraus kann dann ermittelt werden, welche relative Bewegung des Objekts bezüglich des Kraftfahrzeugs möglich ist, ohne dass es hierbei zu einer Kollision kommt.

Die Erfindung sieht vor, dass das Überlagerungsprofil durch Addieren oder Multiplizieren der Profile gebildet wird. Hierdurch kommt es zu dem beschriebenen Herausmitteln derjenigen Anteile der Profile, die zum Hintergrund gehören.

Zu der Erfindung gehören auch Ausführungsformen, durch die sich zusätzliche Vorteile ergeben.

Eine Ausführungsform sieht vor, dass die besagte Verschiebeweite der Profile mittels einer Korrelation ermittelt wird und hierbei die maximale Übereinstimmung, nach welcher gesucht wird, bei einem Korrelationsmaximum festgelegt wird. Hierdurch ergibt sich der Vorteil, das keine aufwändige Mustererkennung durchgeführt werden muss.

Eine Ausführungsform sieht vor, dass das Abgrenzungskriterium zum Erkennen des Referenzmusters im Überlagerungsprofil einen Schwellenwertvergleich vorsieht. All diejenigen Anteile des Überlagerungsprofils, die auf einer Seite des Schwellenwerts liegen, werden dem Referenzmuster zugerechnet. Die übrigen Anteile des Überlagerungsprofils werden dem Hintergrund zugerechnet. Durch den Schwellenwertvergleich ist eine berechnungstechnisch einfaches Vorgehen beim Ermitteln des Referenzmusters vergeben.

Eine Ausführungsform sieht vor, dass mittels der Kamera als der Hintergrund ein Fahruntergrund des Kraftfahrzeugs erfasst wird. Je näher der Hintergrund an der Kamera ist, desto größer ist die Veränderung bei einer Rollbewegung des Kraftfahrzeugs. Der Hintergrund ändert sich entsprechend bei einer Rollbewegung des Kraftfahrzeugs, sodass durch Überlagern der Profile eine entsprechend eindeutige Abgrenzung oder Segmentierung zwischen Objekt und Hintergrund ermöglicht ist.

Eine Ausführungsform sieht vor, dass die vorbestimmte Bildeigenschaft, auf deren Grundlage die Profile gebildet werden, einen Farbwert und/oder einen Kontrastwert und/oder Helligkeitswert und/oder einen Kantendetektionswert eines Bildinhalts des Bildes umfasst. Es wird also zu jedem Pixel, das auf einer Scanlinie liegt, dessen Farbewert (zum Beispiel Rot oder Grün oder Blau) und/oder der Helligkeitswert und/oder ein Kontrastwert (Differenz der Helligkeitswerte zweier benachbarter Pixel) und/oder ein Kantendetektionswert, wie er durch einen Kantendetektionsfilter ermittelt werden kann, ermittelt. Es kann also beispielsweise als Profil ein Kantenprofil vorgesehen sein. Kantendetektionsfilter können dem Stand der Technik entnommen werden.

Eine Ausführungsform sieht vor, dass die Scanlinien und die korrespondierenden Scanlinien einen Verlauf aufweisen, also eine Form oder Krümmung, welche jeweiligen Kurvenbahn entspricht, entlang welcher sich das Objekt aufgrund seiner relativbeweglichen Lagerung am Kraftfahrzeugs bewegen muss. Beispielsweise kann eine Anhängerdeichsel an einer Anhängerkupplung lediglich eine Schwenkbewegung oder Kreisbewegung ausführen. Entsprechend sind dann die Scanlinien als Kreissegmente ausgestaltet. Hierdurch ist sichergestellt, dass ein Bildinhalt, also das Objekt, insbesondere die Anhängerdeichsel, entlang der Scanlinie bewegt ist, wenn es eine Relativbewegung zwischen Objekt und Kraftfahrzeug gibt. Somit bildet sich das Referenzmuster in dem Überlagerungsprofil der Scanlinie heraus.

Eine Ausführungsform sieht vor, dass anhand der Objektgrenzen ein objektspezifischer maximaler Knickwinkel ermittelt wird, bei welchem das Objekt mit dem Kraftfahrzeug kollidiert oder verkantet. Somit kann ohne ursprüngliche Kenntnis der Form einer Anhängerdeichsel mittels des Verfahrens dennoch der maximal mögliche Knickwinkel für das spezifische Objekt, also zum Beispiel die spezifische Anhängerdeichsel, ermittelt werden.

Eine Ausführungsform sieht vor, dass das Objekt eine Anhängerdeichsel eines von dem Kraftfahrzeug geschleppten Anhängers ist. Ein anderes mögliches Objekt wäre beispielsweise eine auswechselbare Baggerschaufel oder eine Abschleppstange.

Eine Ausführungsform sieht vor, dass die Referenzmuster der Scanlinien zu einer zweidimensionalen Karte oder Beschreibung des Objekts zusammengefasst werden. Hierzu werden die Referenzmuster zwischen den Scanlinien interpoliert. Somit erhält man zu jedem möglichen Punkt des Objekts aus der zweidimensionalen Karte eine Angabe der Oberflächenform des Objekts, wie sie durch die Referenzmuster beschrieben ist.

Um das erfindungsgemäße Verfahren in einem Kraftfahrzeug durchzuführen, ist durch die Erfindung eine Steuervorrichtung für ein Kraftfahrzeug bereitgestellt. Die erfindungsgemäße Steuervorrichtung kann beispielsweise als ein Steuergerät des Kraftfahrzeugs ausgestaltet sein. Die Steuervorrichtung weist eine Recheneinrichtung auf, die dazu eingerichtet ist, eine Ausführungsform des erfindungsgemäßen Verfahrens durchzuführen. Die Steuervorrichtung kann hierzu zumindest einen Mikrocontroller und/oder zumindest einen Mikroprozessor umfassen. Zum Durchführen des Verfahrens kann ein Programmcode bereitgestellt sein, der dazu eingerichtet ist, bei Ausführen durch die Recheneinrichtung die Ausführungsform des erfindungsgemäßen Verfahrens durchzuführen. Der Programmcode kann in einem Datenspeicher der Recheneinrichtung gespeichert sein.

Schließlich gehört zu der Erfindung auch ein Kraftfahrzeug mit zumindest einer Kamera zum Erfassen eines Außenbereichs des Kraftfahrzeugs und mit einer Ausführungsform der erfindungsgemäßen Steuervorrichtung. Die Steuervorrichtung ist mit der zumindest einen Kamera gekoppelt. Das erfindungsgemäße Kraftfahrzeug ist bevorzugt als Kraftwagen, insbesondere als Personenkraftwagen oder Lastkraftwagen, ausgestaltet.

Zu der Erfindung gehören auch die Kombinationen der beschriebenen Ausführungsformen. Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Flussschaudiagramm einer Ausführungsform des erfindungsgemäßen Verfahrens;
- Fig. 3: eine schematische Darstellung eines Bildes, das von einer Kamera des Kraftfahrzeugs erzeugt wurde; und
- Fig. 4: ein Diagramm mit Überlagerungsprofilen.
Bei dem im Folgenden erläuterten Ausführungsbeispiel handelt es sich um eine bevorzugte Ausführungsform der Erfindung. Des Weiteren ist die beschriebene Ausführungsform auch durch weitere der bereits beschriebenen Merkmale der Erfindung ergänzbar.
In den Figuren sind funktionsgleiche Elemente jeweils mit denselben Bezugszeichen versehen.

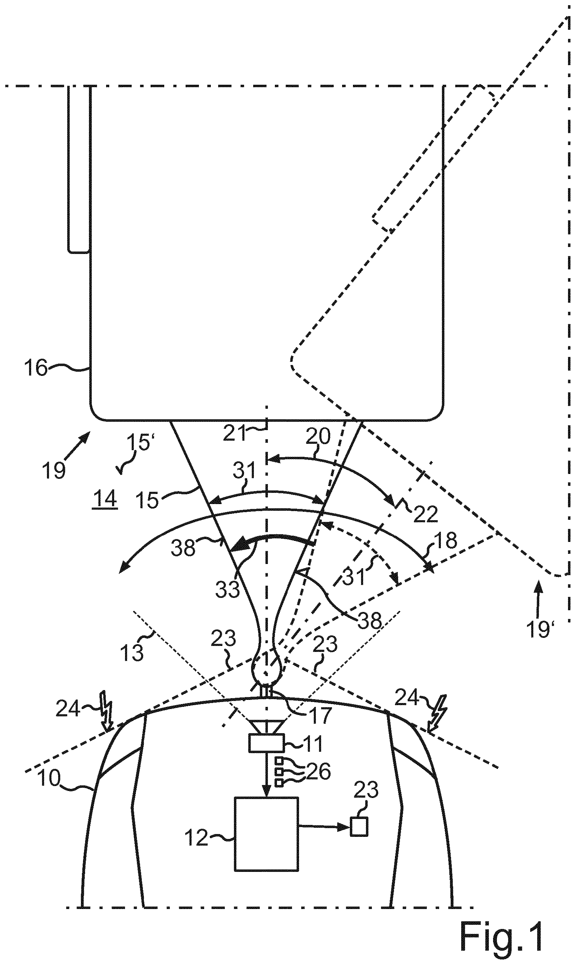

Fig. 1 zeigt ein Kraftfahrzeug 10, bei dem es sich um einen Kraftwagen, insbesondere einen Personenkraftwagen oder Lastkraftwagen handeln kann. Das Kraftfahrzeug 10 kann eine Kamera 11 aufweisen, bei der es sich beispielsweise um eine Videokamera oder Einzelbildkamera handeln kann. Die Kamera 11 kann eine Heckkamera des Kraftfahrzeugs 10 sein. Des Weiteren ist eine Steuervorrichtung 12 des Kraftfahrzeugs 10 dargestellt. Die Steuervorrichtung 12 kann beispielsweise durch ein Steuergerät des Kraftfahrzeugs 10 gebildet sein. Ein Erfassungsbereich 13 der Kamera 11 kann in einen Außenbereich 14 des Kraftfahrzeugs 10 ausgerichtet sein, beispielsweise in einen rückwärtigen Bereich hinter dem Heck des Kraftfahrzeugs 10.

Mittels der Kamera 11 kann somit ein Objekt 15 im Außenbereich 14 erfasst oder abgebildet werden. In dem dargestellten Beispiel kann es sich bei dem Objekt 15 um eine Anhängerdeichsel eines Anhängers 16 handeln. Der Anhänger 16 kann mit seiner Anhängerdeichsel über eine Anhängerkupplung 17 des Kraftfahrzeugs 10 an das Kraftfahrzeug 10 angekuppelt oder angehängt sein. Während eines Fahrt des Kraftfahrzeugs 10 kann somit der Anhänger 16 oder allgemein das Objekt 15 um die Anhängerkupplung 17 herum eine Relativbewegung 18 ausführen, die hier ein Schwenkbewegung darstellt. Der Anhänger 16 ist in zwei möglichen Relativpositionen 19, 19' dargestellt, die sich aus der Relativbewegung 18 bewegen können. Die jeweilige aktuelle Relativposition 19, 19' kann als ein Knickwinkel 20 beschrieben sein, der beispielsweise zwischen einer Längsachse 21 des Kraftfahrzeugs 10 und einer Längsachse 22 des Objekts 15 definiert sein kann. Der dargestellte Knickwinkel 20 ist hier für die Relativposition 19' veranschaulicht.
Die Steuervorrichtung 12 kann bei dem Kraftfahrzeug 10 ermitteln, welcher maximale Knickwinkel 23 für das Objekt 15 möglich ist. Der maximale Knickwinkel 23 ist hier durch Linien repräsentiert, welche eine jeweilige Kante des Objekts 15 zeigen, die mit dem Kraftfahrzeug 10 bei Erreichen des maximalen Knickwinkels 23 eine Kollision 24 mit dem Kraftfahrzeug 10 verursacht. Die Steuervorrichtung 12 kann den maximalen Knickwinkel 23 in dem Kraftfahrzeug 10 signalisieren, wodurch beispielsweise ein Fahrerassistenzsystem dahingehend konfiguriert werden kann, dass es das Kraftfahrzeug 10 autonom oder automatisiert, das heißt ohne ein Zutun eines Fahrers, führt oder manövriert und hierbei den für das Objekt 15 spezifischen maximalen Knickwinkel 23 berücksichtigt, um die Kollision 24 zu vermeiden.

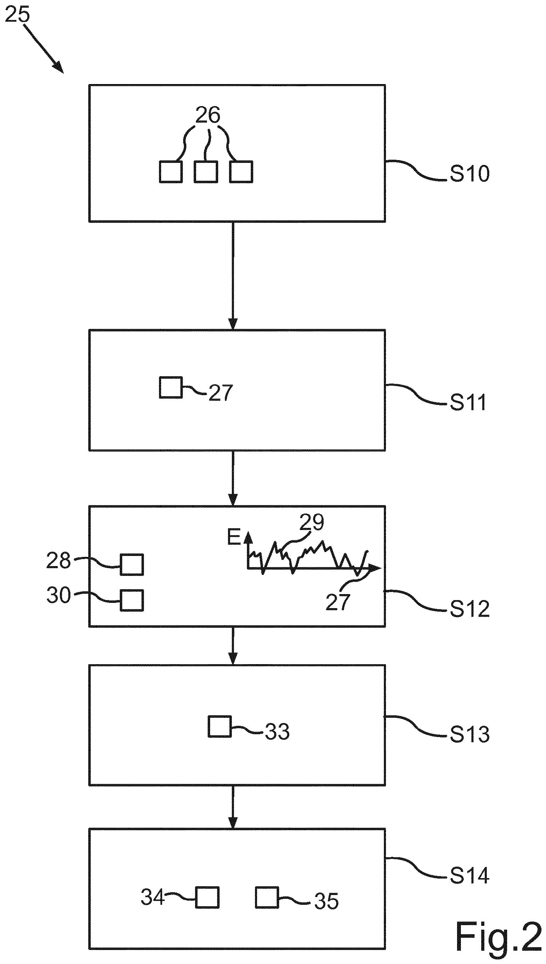

Fig. 2 veranschaulicht hierzu ein Verfahren 25, das durch die Steuervorrichtung 12 zum Ermitteln des maximalen Knickwinkels 13 durchgeführt werden kann.

In einem Schritt S10 kann während einer Fahrt des Kraftfahrzeugs 10, wenn sich die Relativbewegung 18 ergibt, durch die Steuervorrichtung 12 mittels der Kamera 11 zu unterschiedlichen Messzeitpunkten jeweils ein Kamerabild oder kurz Bild 26 des Objekts 15 vor einem Hintergrund 15' erzeugt oder aufgenommen werden. Der Hintergrund 15' kann bei der dargestellten Ausrichtung des Erfassungsbereichs 13 der Kamera 11 ein Fahruntergrund oder Boden sein.

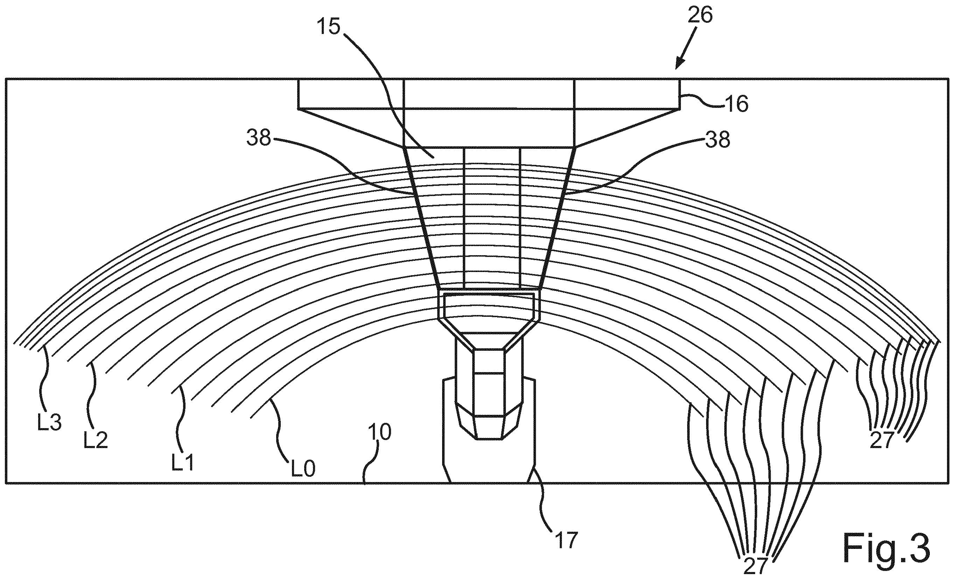

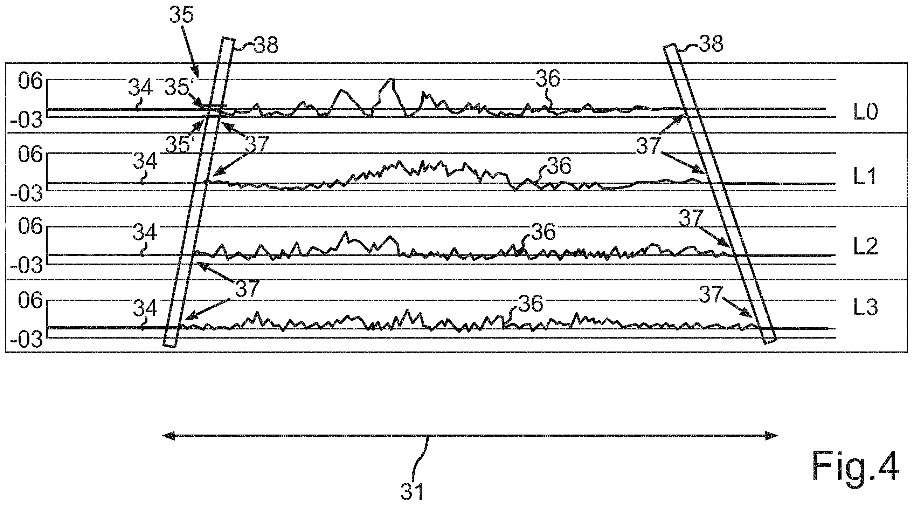

Für die weiteren Erläuterungen des Verfahrens 25 wird zusätzlich auf Fig. 3 und Fig. 4 verwiesen.

Fig. 3 zeigt beispielhaft ein Bild 26, wie es mittels der Kamera 11 von dem Objekt 15 aufgenommen oder erzeugt worden sein kann. Das in Fig. 3 gezeigte Bild 26 kann das Objekt 15 in der Stellung 19 zeigen. Dieses Bild kann als erstes Bild im Sinne der Erfindung angesehen werden.

In einem Schritt S11 können in dem Bild 26 Scanlinien 27 definiert oder festgelegt werden. Eine Form der Scanlinien 27 kann dem Verlauf der Schwenkbewegung 18 entsprechen, wie ihn im jeweiligen Abstand zum Kraftfahrzeug 10 ein Punkt auf dem Objekt 15 ausführen würde. Die Scanlinien 27 können also Kreissegmenten entsprechen, wobei eine entsprechende Verzerrung durch die Perspektive der Kamera 11 und/oder der Optik der Kamera 11 die Form entsprechend ändert. Auch in den übrigen Bildern 26 wird für jede Scanlinie 27 eine jeweils korrespondierende Scanlinie definiert oder festgelegt.

In einem Schritt S12 kann zu jeder Scanlinie 27 zu einer vorbestimmten Bildeigenschaft 28 ein sich entlang der Scanlinie 27 ergebender Verlauf oder ein sich ergebendes Profil 29 ermittelt werden. Bei der Bildeigenschaft kann es sich beispielsweise um eine Farbwert und/oder einen Helligkeitswert handeln. Bevorzugt wird ein Kantenwert einer Kantendetektion 30 verwendet, wie ihn die Kantendetektion 30 entlang der Scanlinie 27 beispielsweise auf der Grundlage der Helligkeitswerte der Pixel des Bilds 26 entlang der Scanlinie 27 ausgibt oder erzeugen kann. Beispielsweise kann als Kantendetektion eine Differenz der Helligkeitswerte benachbarter Pixel berechnet werden.

Das Profil 29 zeigt somit einen Verlauf der Werte E der Bildeigenschaft 28 entlang der Scanlinie 27. Das Bilden des Profils kann in jedem Bild 26 durchgeführt werden, sodass zu jeder korrespondierenden Scanlinie jedes übrigen Bilds 26 ebenfalls ein entsprechend korrespondierendes Profil ermittelt wird. Entscheidend hierbei ist, dass während einer Rollbewegung des Kraftfahrzeugs 10 in den Profilen ein jeweiliger Objektabschnitt oder ein Objektsegment 31 (siehe Fig. 1) in allen Profilen der korrespondierenden Scanlinien 27 übereinstimmen. Lediglich ihre Lage entlang der jeweiligen Scanlinie ist unterschiedlich und zwar abhängig von der jeweiligen Stellung 19, 19' des Objekts 15. Dagegen ändert sich der Hintergrund 15' aufgrund der Rollbewegung in jedem Bild 26, sodass die entsprechenden Hintergrundabschnitte oder Hintergrundsegmente in jedem Profil anders aussehen oder verlaufen.

In einem Schritt S13 kann zu dem Profil 29 des Bilds 26 eine jeweilige Verschiebeweite 33 (siehe Fig. 1) ermittelt werden. Die Verschiebeweite gibt an, wie weit das korrespondierende Profil jedes anderen Bilds 26 bezüglich des Profils 29 verschoben werden muss, um eine maximale Übereinstimmung zu erhalten. Die Verschiebeweite 33 kann beispielsweise auf der Grundlage einer Korrelation erfolgen, sodass sich als maximale Übereinstimmung das Korrelationsmaximum ergibt.

In einem Schritt S14 kann dem Profil 29 jeder Scanlinie 27 des Bilds 26 das um die jeweilige Verschiebeweite 33 verschobene korrespondierende Profil jedes anderen Bilds 26 überlagert werden. Die Überlagerung kann beispielsweise mittels einer Multiplikation der Profile erfolgen. Es entsteht somit für jede Scanlinie 27 ein Überlagerungsprofil 34.

Fig. 4 zeigt hierzu für vier beispielhafte Scanlinien L0, L1, L2, L3, deren Lage in Fig. 3 veranschaulicht ist, das jeweils resultierende Überlagerungsprofil 34. In dem Überlagerungsprofil 34 jeder Scanlinie 27 kann auf der Grundlage eines vorbestimmten Abgrenzungskriteriums 35 ein Referenzmuster 36 ermittelt werden, das dem Überlagerungsprofil, das heißt dem Objektsegment 31, entspricht. Das Abgrenzungskriteriums 35 kann beispielsweise Schwellenwerte 35' vorsehen, bei deren Überschreiten oder Unterschreiten durch das Überlagerungsprofil 34 signalisiert wird, dass es sich um das Referenzmuster 36 des Objekts 15 handelt. Die Schwellenwerte 35' sind hier für ein Beispiel in Fig. 4 veranschaulicht.

Anhand der jeweiligen Grenzen 37 des Referenzmusters 36 jeder Scanlinie 27 können somit jeweilige Objektgrenzen 38 ermittelt werden. Es können durch die Steuervorrichtung 12 dann entweder die Objektgrenzen 38 oder ein daraus berechneter maximaler Knickwinkel 23 signalisiert werden.

Somit ist die automatische Erkennung des maximal einstellbaren Knickwinkels 23 eines Anhängers 16 ermöglicht. Damit erhöht sich der Dynamikbereich oder der Lenkwinkelbereich für den Fahrer soweit, wie es das aktuelle Objekt 15 zulässt.

Durch Bilden von Profilen, beispielsweise mittels einer Kantenfunktion, die über der Zeit verfolgt werden, ergibt sich somit insgesamt für jede Scanlinie 27 ein Referenzmuster 26. Dieses Referenzmuster 26 beinhaltet die Information über die Anhängergeometrie und damit die reale Ausdehnung beispielsweise einer Anhängerdeichsel oder allgemein eines Objekts 15. Dadurch lässt sich der Knickwinkel 20 des Anhängers 16 soweit steuern, dass die Anhängerdeichsel mit einem Sicherheitsabstand zum Kraftfahrzeug geregelt oder geführt werden kann.

Der Fahrer kann somit abhängig von seinem spezifischen Anhänger wesentlich größere Knickwinkel 20 einregeln und hat somit eine höhere Dynamik beim Fahren mit dem Anhänger 16.

Insgesamt zeigt das Beispiel, wie auf der Grundlage der Erfindung eine optische Erkennung eines maximalen Knickwinkels eines Anhängers ermöglicht ist.

### Bezugszeichenliste

- 10: Kraftfahrzeug
- 11: Kamera
- 12: Steuervorrichtung
- 13: Erfassungsbereich
- 14: Außenbereich
- 15: Objekt
- 15': Hintergrund
- 16: Anhänger
- 17: Anhängerkupplung
- 18: Relativbewegung
- 19: Stellung
- 19': Stellung
- 20: Knickwinkel
- 21: Längsachse
- 22: Mittelachse
- 23: Maximaler Knickwinkel (symbolisch)
- 24: Kollision
- 25: Verfahren
- 26: Bild
- 27: Scanlinie
- 28: Bildeigenschaft
- 29: Profil
- 30: Kantendetektion
- 31: Objektsegment
- 33: Verschiebweite
- 34: Überlagerungsprofil
- 35: Abgrenzungskriterium
- 35': Schwellenwert
- 36: Referenzmuster
- 37: Grenze
- 38: Objektgrenze
- E: Wert der Bildeigenschaft
- L0, L1: Scanlinie
- L2, L3: Scanlinie

## Patentansprüche

1. Verfahren (25) zum Ermitteln von Objektgrenzen (38) eines Objekts (15) in einem Außenbereich (14) eines Kraftfahrzeugs (10), wobei das Objekt (15) mit dem Kraftfahrzeug (10) relativbeweglich verbunden ist und durch eine Steuervorrichtung (12) des Kraftfahrzeugs (10) während einer Fahrt des Kraftfahrzeugs (10) mittels einer Kamera (11) zu zumindest zwei unterschiedlichen Messzeitpunkten jeweils ein Bild (26), welches das Objekt (15) vor einem Hintergrund (15') des Außenbereichs (14) zeigt, erzeugt wird und
- in einem ersten der Bilder (26) zumindest eine Scanlinie (27) und zu jeder Scanlinie (27) in jedem anderen der Bilder (26) eine korrespondierende Scanlinie festgelegt wird und
- zu jeder Scanlinie (26) des ersten Bilds (26) zu einer vorbestimmten Bildeigenschaft (28) ein sich entlang der Scanlinie (27) ergebendes Profil (29) und entlang der jeweils korrespondierenden Scanlinie jedes anderen Bilds (26) ein sich ergebendes korrespondierendes Profil ermittelt wird und
- zu dem Profil (29) jeder Scanlinie (27) des ersten Bilds eine jeweilige Verschiebeweite (33) ermittelt wird, um welche das korrespondierende Profil jedes anderen Bilds (26) bezüglich des Profils (29) verschoben werden muss, um eine maximale Übereinstimmung zu erhalten,
**dadurch gekennzeichnet, dass**
- dem Profil (29) jeder Scanlinie (27) des ersten Bilds (26) das um die jeweilige Verschiebeweite (33) verschobene korrespondierende Profil jedes anderen Bilds (26) überlagert wird, sodass sich für jede Scanlinie (27) ein Überlagerungsprofil (34) ergibt, wobei das Überlagerungsprofil (34) durch Addieren oder Multiplizieren der Profile (29) gebildet wird, und
- in dem Überlagerungsprofil (34) jeder Scanlinie (27) auf der Grundlage eines vorbestimmten Abgrenzungskriteriums (35) ein Referenzmuster (36) ermittelt wird und jeweilige Grenzen (37) des Referenzmusters (36) als die jeweiligen Objektgrenzen (38) signalisiert werden.

2. Verfahren (25) nach Anspruch 1, wobei die Verschiebeweite (33) mittels einer Korrelation ermittelt wird und hierbei die maximale Übereinstimmung bei einem Korrelationsmaximum festgelegt wird.

3. Verfahren (25) nach einem der vorhergehenden Ansprüche, wobei das Abgrenzungskriterium (35) einen Schwellenwertvergleich vorsieht.

4. Verfahren (25) nach einem der vorhergehenden Ansprüche, wobei mittels der Kamera (11) als der Hintergrund (15') ein Fahruntergrund des Kraftfahrzeugs (10) erfasst wird.

5. Verfahren (25) nach einem der vorhergehenden Ansprüche, wobei die vorbestimmte Bildeigenschaft (28) einen Farbwert und/oder Helligkeitswert und/oder einen Kontrastwert und/oder einen Kantendetektionswert eines Bildinhalts des jeweiligen Bildes (26) umfasst.

6. Verfahren (25) nach einem der vorhergehenden Ansprüche, wobei die Scanlinien (27) und die korrespondierenden Scanlinien einen Verlauf aufweisen, welcher einer jeweiligen Kurvenbahn entspricht, entlang welcher sich das Objekt (15) aufgrund seiner relativbeweglichen Lagerung am Kraftfahrzeugs (10) bei einer Relativbewegung (18) bewegen muss.

7. Verfahren (25) nach einem der vorhergehenden Ansprüche, wobei anhand der Objektgrenzen (38) ein objektspezifischer maximaler Knickwinkel (23) ermittelt wird, bei welchem das Objekt (15) mit dem Kraftfahrzeug (10) kollidiert.

8. Verfahren nach einem der vorhergehenden Ansprüche, wobei das Objekt (15) eine Anhängerdeichsel eines von dem Kraftfahrzeug (10) geschleppten Anhängers (16) ist.

9. Verfahren nach einem der vorhergehenden Ansprüche, wobei die Referenzmuster (34) der Scanlinien (27) zu einer zweidimensionalen Karte des Objekts (15) zusammengefasst werden.

10. Steuervorrichtung (12) für ein Kraftfahrzeug (10), wobei die Steuervorrichtung (12) eine Recheneinrichtung aufweist, die dazu eingerichtet ist, ein Verfahren nach einem der vorhergehenden Ansprüche durchzuführen.

11. Kraftfahrzeug (10) mit zumindest einer Kamera (11) zum Erfassen eines Außenbereichs (14) des Kraftfahrzeugs (10) und mit einer Steuervorrichtung (12) nach Anspruch 10, wobei die Steuervorrichtung (12) mit der zumindest einen Kamera (11) gekoppelt ist.

## Claims

1. Method (25) for determining object boundaries (38) of an object (15) in an external area (14) of a motor vehicle (10), wherein the object (15) is connected to the vehicle (10) in a relatively movable fashion, and in each case an image (26), which shows the object (15) against a background (15') of the external area (14), is generated by a control device (12) of the motor vehicle (10) by means of a camera (11) at at least two different measuring times while the motor vehicle (10) is travelling, and
- in a first of the images (26) at least one scanning line (27) is defined, in each of the other images (26) a corresponding scanning line is defined for each scanning line (27) and
- for each scanning line (26) of the first image (26) a profile (29) which occurs along the scanning line (27) is determined for a predetermined image property (28), and a resulting corresponding profile is determined along the respectively corresponding scanning line of each other image (26), and
- for the profile (29) of each scanning line (27) of the first image a respective shift distance (33) is determined, by which distance the corresponding profile of each other image (26) has to be shifted with respect to the profile (29) in order to obtain maximum correspondence,
**characterized in that**
- the profile (29) of each scanning line (27) of the first image (26) has superimposed on it the corresponding profile, shifted by the respective shifting distance (33), of each other image (26), with the result that a superimposition profile (34) is produced for each scanning line (27), wherein the superimposition profile (34) is formed by adding or multiplying the profiles (29), and
- in the superimposition profile (34) of each scanning line (27), a reference pattern (36) is determined on the basis of a predetermined delimitation criterion (35), and respective boundaries (37) of the reference pattern (36) are signalled as the respective object boundaries (38).

2. Method (25) according to Claim 1, wherein the shifting distance (33) is determined by means of correlation, and in the process the maximum correspondence for a correlation maximum is defined.

3. Method (25) according to one of the preceding claims, wherein the delimitation criterion (35) provides a threshold value comparison.

4. Method (25) according to one of the preceding claims, wherein a driving underlying surface of the motor vehicle (10) is captured as the background (15') by means of the camera (11).

5. Method (25) according to one of the preceding claims, wherein the predetermined image property (28) comprises a colour value and/or brightness value and/or contrast value and/or an edge detection value of image contents of the respective image (26).

6. Method (25) according to one of the preceding claims, wherein the scanning lines (27) and the corresponding scanning lines have a profile which corresponds to a respective curved path along which the object (15) must move when there is a relative movement (18), owing to the relatively movable support of said object (15) on the motor vehicle (10).

7. Method (25) according to one of the preceding claims, wherein an object-specific maximum bend angle (23), at which the object (15) collides with the motor vehicle (10), is determined on the basis of the object boundaries (38).

8. Method according to one of the preceding claims, wherein the object (15) is a trailer drawbar of a trailer (16) which is towed by the motor vehicle (10).

9. Method according to one of the preceding claims, wherein the reference patterns (34) of the scanning lines (27) are combined to form a two-dimensional map of the object (15).

10. Control device (12) for a motor vehicle (10), wherein the control device (12) has a computing apparatus which is configured to carry out a method according to one of the preceding claims.

11. Motor vehicle (10) having at least one camera (11) for capturing an external area (14) of the motor vehicle (10) and having a control device (12) according to Claim 10, wherein the control device (12) is coupled to the at least one camera (11).

## Revendications

1. Procédé (25) de détermination des limites d'objet (38) d'un objet (15) dans une zone externe (14) d'un véhicule automobile (10), dans lequel l'objet (15) est relié en mobilité relative au véhicule automobile (10), et un dispositif de commande (12) du véhicule automobile (10) génère pendant un trajet du véhicule automobile (10) au moyen d'une caméra (11) à au moins deux instants de mesure différents respectivement une image (26) montrant l'objet (15) devant un arrière-plan (15') de la zone externe (14), et
- au moins une ligne de balayage (27) est établie sur une première des images (26) et une ligne de balayage correspondante est établie pour chaque ligne de balayage (27) sur chaque autre des images (26), et
- pour chaque ligne de balayage (26) de la première image (26) pour une propriété d'image prédéterminée (28), on détermine un profil résultant (29) le long de la ligne de balayage (27) et un profil correspondant résultant le long de la ligne de balayage respectivement correspondante de chaque autre image (26), et
- pour chaque profil (29) de chaque ligne de balayage (27) de la première image on détermine une largeur de décalage respective (33) de laquelle le profil correspondant de chaque autre image (26) doit être décalé par rapport au profil (29) afin d'obtenir une correspondance maximale,
**caractérisé en ce que**
- le profil correspondant décalé de la largeur de décalage (33) respective est superposé au profil (29) de chaque ligne de balayage (27) de la première image (26) de sorte que pour chaque ligne de balayage (27) il en résulte un profil superposé (34), le profil superposé (34) étant formé en additionnant ou en multipliant les profils (29), et
- dans le profil superposé (34) de chaque ligne de balayage (27), sur la base d'un critère de délimitation (35) prédéterminé, un motif de référence (36) est déterminé, et des limites respectives (37) du motif de référence (36) sont signalisées comme les limites d'objet (38) respectives.

2. Procédé (25) selon la revendication 1, dans lequel la largeur de décalage (33) est déterminée au moyen d'une corrélation, et dans ce cas, la correspondance maximale est établie à une corrélation maximale.

3. Procédé (25) selon l'une quelconque des revendications précédentes, dans lequel le critère de délimitation (35) prévoit une comparaison de valeurs seuil.

4. Procédé (25) selon l'une quelconque des revendications précédentes, dans lequel une surface de roulement du véhicule automobile (10) est détectée au moyen de la caméra (11) comme l'arrière-plan (15').

5. Procédé (25) selon l'une quelconque des revendications précédentes, dans lequel la propriété d'image prédéterminée (28) comprend une valeur chromatique et/ou une valeur de luminosité et/ou une valeur de contraste et/ou une valeur de détection de contour d'un contenu d'image de l'image (26) respective.

6. Procédé (25) selon l'une quelconque des revendications précédentes, dans lequel les lignes de balayage (27) et les lignes de balayage correspondantes présentent un tracé qui correspond à une trajectoire courbe respective le long de laquelle l'objet (15) doit se déplacer lors d'un déplacement relatif (18) en raison de sa position de mobilité relative sur le véhicule automobile (10).

7. Procédé (25) selon l'une quelconque des revendications précédentes, dans lequel les limites d'objet (38) permettent de déterminer un angle de pliage maximal (23) spécifique à l'objet selon lequel l'objet (15) entre en collision avec le véhicule automobile (10).

8. Procédé selon l'une quelconque des revendications précédentes, dans lequel l'objet (15) est une barre d'attelage d'une remorque (16) tractée par le véhicule automobile (10).

9. Procédé selon l'une quelconque des revendications précédentes, dans lequel le motif de référence (34) des lignes de balayage (27) est regroupé en une carte bidimensionnelle de l'objet (15).

10. Dispositif de commande (12) pour un véhicule automobile (10), le dispositif de commande (12) présentant un dispositif de calcul aménagé pour exécuter un procédé selon l'une quelconque des revendications précédentes.

11. Véhicule automobile (10), comprenant au moins une caméra (11) pour détecter une zone externe (14) du véhicule automobile (10) et comprenant un dispositif de commande (12) selon la revendication 10, le dispositif de commande (12) étant couplé à ladite au moins une caméra (11).
